# EUROPEAN PATENT SPECIFICATION

(11) **EP 3 729 554 B1**
(45) Date of publication and mention of the grant of the patent: **09.03.2022**
(21) Application number: 18812182.6
(22) Date of filing: 10.12.2018
(51) Int. Cl.: H01M 10/54, C22B 1/00, C22B 3/00, C22B 3/46, C22B 7/00, C22B 26/12

(54) **BATTERY RECYCLING BY TREATMENT OF THE LEACH WITH METALLIC NICKEL**
BATTERIERECYCLING DURCH BEHANDLUNG DER LAUGE MIT METALLISCHEM NICKEL
RECYCLAGE DES BATTERIES PAR TRAITEMENT DU LIXIVIAT AVEC DU NICKEL MÉTALLIQUE

(30) Priority: 19.12.2017 EP 17208294
(43) Date of publication of application: 28.10.2020
(73) Proprietor: BASF SE, 67056 Ludwigshafen am Rhein (DE)
(72) Inventor: ROHDE, Wolfgang, 67056 Ludwigshafen (DE); ZEILINGER, Michael, 67056 Ludwigshafen (DE); ADERMANN, Torben, 67056 Ludwigshafen (DE); WEIGUNY, Sabine, 67056 Ludwigshafen (DE); SEELER, Fabian, 67056 Ludwigshafen (DE); SCHIERLE-ARNDT, Kerstin, 67056 Ludwigshafen (DE); RYLL, Thomas Michael, 67056 Ludwigshafen (DE)
(74) Representative: BASF IP Association
(86) International application number: PCT/EP2018/084102
(87) International publication number: WO 2019/121086

(56) References cited:
- WO-A1-2004/062023
- WO-A1-2016/194658
- WO-A1-2017/091562
- GB-A- 842 946
- JP-A- 2004 182 533
- JP-A- 2014 162 982
- US-A1- 2007 196 725
- US-A1- 2013 206 607
- US-A1- 2017 077 564

## Description

The present invention is directed towards a process for the recovery of transition metal from cathode active materials containing nickel and lithium as defined in claim 1.

Storing electrical energy is a subject of growing interest. Efficient storage of electric energy would allow electric energy to be generated when it is advantageous and used when and where needed. Secondary electrochemical cells are well suited for this purpose due to their rechargeability. Secondary lithium batteries are of special interest for energy storage since they provide high energy density due to the small atomic weight and the large ionization energy of lithium, and they have become widely used as a power source for many portable electronics such as cellular phones, laptop computers, mini-cameras, etc. but also for electric vehicles. Especially the growing demand for raw materials such as cobalt and nickel will cause challenges in future time.

Lifetime of lithium ion batteries is not unlimited. It is to be expected, therefore, that a growing number of used lithium ion batteries will emerge. Since they contain cobalt, nickel, and lithium they may form a valuable source of raw materials for a new generation of lithium ion batteries. For that reason, increased research work has been performed with the goal of recycling transition metals - and, optionally, even lithium - from used lithium ion batteries.

Lithium ion batteries or parts of lithium ion batteries that do not meet the specifications and requirements, so-called off-spec materials and production waste, may as well be a source of raw materials.

Two main processes have been subject to raw material recovery. One main process is based upon pyrometallurgical smelting of the corresponding battery scrap followed by hydrometallurgical processing of the metallic alloy (matte) obtained from the smelting process. The other main process is the direct hydrometallurgical processing of battery scrap materials. Principles have been disclosed in J. Power Sources, 2014, 262, pages 255 ff. Such hydrometallurgical processes will furnish transition metals as aqueous solutions of their salts or in precipitated form, for example as hydroxides, separately or already in the desired stoichiometries for making a new cathode active material. In the latter case the composition of metal salt solutions may be adjusted to the desired stoichiometries by addition of single metal components.

In WO 2017/091562, a co-precipitation of transition metals is described. In WO 2014/180743, a process of co-precipitation is described wherein ammonia or amines are used.

A main drawback of processes known in the art is that many recycled transition metal solutions - or hydroxides - suffer from compounds other than nickel/cobalt compounds that stem from various elements of the respective lithium ion batteries. Examples are, in particular, Sn, Zr, Zn, Cu, Fe, F, P, and Al. Iron and zinc are frequently parts of the housing. Tin may be a component of solder from, e.g., solder parts. Although aluminum may be used as doping - or as key component in materials like NCA (lithiated nickel cobalt aluminum oxide) the amounts present in battery scraps is inconsistent and usually too high. Aluminum and copper may be contained in current collectors while aluminum may be part of battery housings as well. Fluoride and phosphorous are contained in the liquid electrolyte, e.g. the widely employed salt LiPF₆. Especially copper is highly undesired, and even traces higher than 10 ppm in a cathode active material are in many cases not accepted.

In US 2007/0196725, a method of copper removal is described. The method, however, has the drawback that copper is removed at the expense of introduction of another impurity.

WO 2004/062023 A1 and WO 2016/194658 A1 disclose copper cementation on matallic cobalt and nickel as a means for reducing copper impurities in a solution.

It was therefore an objective of the present invention to provide a process that allows the easy recovery of transition metals such as nickel and, if applicable, cobalt and/or manganese. It was a particular objective of the present invention to provide a process that allows the recovery of transition metal that contains only tolerable traces of impurities such as copper, iron, and zinc to allow direct usage of the obtained solution for the synthesis of new cathode active material. Accordingly, the process as defined at the outset has been found, hereinafter also referred to as inventive process or as inventive recycling process. The inventive process comprises steps defined in more detail below, hereinafter also referred to as step (a), step (b), step (b1), step (c) etc.:
(a) treating a lithium containing transition metal oxide material with a leaching agent (preferably an acid selected from sulfuric acid, hydrochloric acid, nitric acid, methanesulfonic acid, oxalic acid and citric acid),
(b) adjusting the pH value to 2.5 to 8,
   (b1) removal of precipitates of phosphates, tungstate, oxides, hydroxides or oxyhydroxides of Al, Fe, Zr, Zn, Ca or Cu or combinations of at least two of the foregoing, and
(c) treating the solution obtained in step (b) with metallic nickel, cobalt or manganese or a combination of at least two of the foregoing.

Steps (a) to (c) are carried out in the above order.

The process is suitable for the recovery of transition metal from cathode active materials containing nickel and lithium. **Recovery** of transition metals from lithium ion batteries usually means that the transition metals (e.g. nickel, cobalt and/or manganese) and optionally further valuable elements (e.g. lithium and/or carbon) can be at least partly recovered, typically at an recovery rate of each at least 10, 20, 30, 40, 50, 60, 70, 80, 90, 95, 99, 99.9 or about100 wt%. Preferably, at least nickel is recovered by the process.

The **cathode active material** usually means the cathodes of lithium ion batteries, which are often commercially available. The cathode active material usually stems from lithium ion batteries, such as used or new lithium ion batteries, parts of lithium ion batteries, off-spec materials thereof (e.g. that do not meet the specifications and requirements), or production waste from lithium ion batteriy production. Preferably, the cathode active materials from which transition metals are to be recovered also contain at least one of cobalt and manganese.

### Step (a)

Step (a) includes treating a lithium containing transition metal oxide material with a leaching agent (preferably an acid selected from sulfuric acid, hydrochloric acid, nitric acid, methanesulfonic acid, oxalic acid and citric acid). Preferably, such acid is an aqueous acid.

Said **lithium containing transition metal oxide material** is usually a material that stems from lithium ion batteries or parts of lithium ion batteries. For safety reasons, such lithium ion batteries are discharged completely, otherwise, shortcuts may occur that constitute fire and explosion hazards. Such lithium ion batteries may be disassembled, punched, milled, for example in a hammer mill, or shredded, for example in an industrial shredder. Such treatment can be done under inert conditions to avoid reaction of components of the battery with air and water. Suitable inert conditions are e.g. under inert gases like argon, nitrogen or carbon dioxide or under vacuum. It is also possible to perform the whole comminution process of the batteries or battery parts under water to ensure a direct and complete reaction of the respective battery components with water e.g. the complete hydrolysis of LiPF₆ or residual lithium species from incomplete discharging.

It is advantageous to at least partially remove electrolytes before starting step (a), especially electrolytes that comprise an organic solvent or a mixture of organic solvents, for example by mechanic removal or drying, for example at temperatures in the range of from 50 to 200°C. A preferred range of pressure for the removal of organic solvent(s) is 0.01 to 2 bar, preferably 10 to 100 mbar.

In one embodiment of the present invention, said lithium containing transition metal oxide material is from **battery scraps**. Such battery scraps may stem from used batteries or from production waste, for example off-spec material. In a preferred embodiment of the present invention, said lithium containing transition metal oxide material is from mechanically treated battery scraps, for example from battery scraps treated in a hammer mill or in an industrial shredder. Such lithium containing transition metal oxide material may have an average particle diameter (D50) in the range of from 1 µm to 1 cm, preferably from 1 to 500 µm, and in particular from 3 to 250 µm.

In another preferred embodiment of the present invention bigger parts of the battery scrap like the housings, the wiring and the electrode carrier films are separated mechanically such that the corresponding materials can be widely excluded from the lithium containing transition metal oxide material that is employed in the process of the present invention.

Said lithium containing transition metal oxide material may have a regular shape but usually it has irregular shape. It is preferred, though, to remove a light fraction such as housing parts made from organic plastics and aluminum foil or copper foil as far as possible, for example in a forced stream of gas, air separation or classification.

The shredded battery scrap material may be subjected to sorting techniques to recover some components. Magnetizable components may be recovered by magnetic separation, conducting metal parts by eddy current separators and insulating components by electrosorting. Sensor based sorting techniques may also be employed.

In one embodiment of the present invention, the mechanically treated battery scrap is subjected to a solvent treatment to remove organic compounds e.g. the electrolyte and the conducting salts and additives. Preferably this is done under exclusion of water or humidity. Suitable solvents are alkyl carbonates like dimethyl carbonate ethylene carbonate or propylene carbonate or solvents from the group of ethers, ketones or nitriles.

In one embodiment of the present invention, the mechanically treated battery scrap is subjected to a solvent treatment in order to dissolve and separate polymeric binders used to bind the lithium transition metal oxides to current collector films, or, e.g., to bind graphite to current collector films. Suitable solvents are N-methylpyrrolidone, N,N-dimethylformamide, N,N-dimethylacetamide, N-ethylpyrrolidone, tetramethylurea, triethylphosphate, trimethylphosphate and dimethylsulfoxide, in pure form, as mixtures of at least two of the foregoing, or as a mixture with 1 to 99 % by weight of water.

In one embodiment of the present invention, said lithium containing transition metal oxide material does not contain a major amount of impurities such as, but not limited to, other parts or materials from parts of a lithium ion battery. Such lithium containing transition metal oxide material may stem from off-spec material from the production of the corresponding cathode active materials, batteries, or cells.

However, in a preferred embodiment of the inventive process said lithium containing transition metal oxide material contains in the range of from 0.1 to 80% by weight of **compounds other** than nickel/lithium compounds, or lithium/nickel/cobalt components or lithium/nickel/cobalt/ manganese compounds, if applicable, and in extreme cases the valuable material is a minority component. Examples of such components are carbon in electrically conductive form, hereinafter also referred to as conductive carbon, for example graphite, soot, and graphene. Further examples of such components are solvents used in electrolytes, for example organic carbonates such diethyl carbonate. Further examples of such components are copper and its compounds, aluminum and compounds of aluminum, for example alumina, iron and iron compounds, zinc and zinc compounds, silicon and silicon compounds, for example silica and oxidized silicon SiO_{y} with zero < y < 2, tin, silicon-tin alloys, precious metals (e.g. Ag, Au, Pd, Pt) and their compounds and organic polymers such as polyethylene, polypropylene, and fluorinated polymers, for example polyvinylidene fluoride, and the like. Further examples of impurities are fluoride and compounds of phosphorous that may stem from liquid electrolytes, for example in the widely employed LiPF₆ and products stemming from the hydrolysis of LiPF₆. Battery scraps that serve as starting material for the inventive process may stem from multiple sources, and therefore said lithium containing transition metal oxide material in most of the embodiments contains compounds other than nickel/cobalt compounds or nickel/cobalt/ manganese components, if applicable, one of such components being carbon in electrically conductive form in the range of from 2 to 65 % by weight, referring to entire lithium containing transition metal oxide material.

In a preferred embodiment of the present invention, said lithium containing transition metal oxide material contains in the range of from 20 ppm to 3 % by weight of copper, as metal or in form of one or more of its compounds.

In a preferred embodiment of the present invention, said lithium containing transition metal oxide material contains in the range of from 100 ppm to 15 % by weight of aluminum, as metal or in form of one or more of its compounds.

In a preferred embodiment of the present invention, said lithium containing transition metal oxide material contains in the range of from 100 ppm to 5 % by weight of iron, as metal or alloy or in form of one or more of its compounds.

In a preferred embodiment of the present invention, said lithium containing transition metal oxide material contains in the range of from 20 ppm to 2 % by weight of zinc, as metal or alloy or in form of one or more of its compounds.

In a preferred embodiment of the present invention, said lithium containing transition metal oxide material contains in the range of from 20 ppm to 2 % by weight of zirconium, as metal or alloy or in form of one or more of its compounds.

In a preferred embodiment of the present invention, said lithium containing transition metal oxide material contains in the range of from 20 ppm to 2 % by weight of tungsten, as metal or alloy or in form of one or more of its compounds.

In a preferred embodiment of the present invention, said lithium containing transition metal oxide material contains in the range of from 2% to 8% by weight of fluorine, calculated as a sum of organic fluoride bound in polymers and inorganic fluoride in one or more of its inorganic fluorides.

In a preferred embodiment of the present invention, said lithium containing transition metal oxide material contains in the range of from 0.2% to 2% by weight of phosphorus. Phosphorus may occur in one or more inorganic compounds.

Said lithium containing transition metal oxide material contains nickel, preferably nickel and at least one of cobalt and manganese. Examples of such lithium containing transition metal oxide materials may be based on LiNiO₂, on lithiated nickel cobalt manganese oxide ("NCM") or on lithiated nickel cobalt aluminum oxide ("NCA") or mixtures thereof. It is also possible that such mixtures contain lithium cobalt oxide or lithium manganese oxide compounds.

Examples of layered **nickel-cobalt-manganese oxides** are compounds of the general formula Li₁₊ₓ(NiₐCo_{b}Mn_{c}M¹_{d})₁₋ₓO₂, with M¹ being selected from Mg, Ca, Ba, Al, Ti, Zr, Zn, Mo, V and Fe, the further variables being defined as follows:
zero ≤ x ≤ 0.2
0.1 ≤ a ≤ 0.8,
Zero ≤ b ≤ 0.5, preferably 0.05 < b ≤ 0.5,
zero ≤ c ≤ 0.6,
zero ≤ d ≤ 0.1, and a + b + c + d = 1.

In a preferred embodiment, in compounds according to general formula (I)

Li₍₁₊ₓ₎[NiₐCo_{b}Mn_{c}M¹_{d}]₍₁₋ₓ₎O₂ (I)

M¹ is selected from Ca, Mg, Zr, Al and Ba,
and the further variables are defined as above.

Examples of lithiated nickel-cobalt aluminum oxides are compounds of the general formula Li[NiₕCoᵢAlⱼ]O₂₊ᵣ. Typical values for r, h, i and j are:
h is in the range of from 0.8 to 0.90,
i is in the range of from 0.15 to 0.19,
j is in the range of from 0.01 to 0.05, and
r is in the range of from zero to 0.4.

Particularly preferred are Li₍₁₊ₓ₎[Ni_{0.33}Co_{0.33}Mn_{0.33}]₍₁₋ₓ₎O₂, Li₍₁₊ₓ₎[Ni_{0.5}Co_{0.2}Mn_{0.3}]₍₁₋ₓ₎O₂, Li₍₁₊ₓ₎[Ni_{0.6}Co_{0.2}Mn_{0.2}]₍₁₋ₓ₎O₂, Li₍₁₊ₓ₎[Ni_{0.7}Co_{0.2}Mn_{0.3}]₍₁₋ₓ₎O₂, and Li₍₁₊ₓ₎[Ni_{0.8}Co_{0.1}Mn_{0.1}]₍₁₋ₓ₎O₂, each with x as defined above.

**Before step (a),** it is preferred to wash said lithium containing transition metal oxide material with water and to thereby remove liquid impurities and water-soluble impurities from the lithium containing transition metal oxide material. Said washing step may be improved by a grinding for example in a ball mill or stirred ball mill.

The washed lithium containing transition metal oxide material may be recovered by a solid-liquid separation step, for example a filtration or centrifugation or any kind of sedimentation and decantation. In order to support the recovery of finer particles of such solid lithium containing transition metal material, flocculants may be added, for example polyacrylates.

In one embodiment of the present invention, prior to step (a) a removal of carbon and/or polymeric materials is performed by at least one of the following methods, which are usually solid-solid-separation methods: gravity concentration or flotation or dense media separation or magnetic separation.

In one embodiment of the present invention, an aqueous slurry obtained prior to step (a) is subjected to a flotation step. A flotation step serves to separate hydrophobic non-soluble components like carbon and polymers from the metal or metal oxide components. Such a flotation step may be performed by mechanical, column or pneumatic or hybrid flotations. In many embodiments, collector compounds are added to the slurry which render the hydrophobic components even more hydrophobic. Suitable collector compounds for carbon and polymeric materials are hydrocarbons or fatty alcohols which are introduced in amounts of 1 g to 50 kg/t of lithium containing transition metal oxide material. It is also possible to perform the flotation in an inverse sense, i.e., transforming the originally hydrophilic components into strongly hydrophobic components by special collector substances, e.g., fatty alcohol sulfates or esterquats. Preferred is the direct flotation employing hydrocarbon collectors. In order to improve the selectivity of the flotation towards carbon and polymeric material particles suppressing agents can be added that reduce the amounts of entrained metallic and metal oxide components in the froth phase. Suppressing agents that can be used may be acids or bases for controlling the pH value in a range of from 3 to 9 or ionic components that may adsorb on more hydrophilic components. In order to increase the efficiency of the flotation it may be advantageous to add carrier particles that form agglomerates with the hydrophobic target particles under the flotation conditions.

Other solid-solid separation steps that may be applied to separate carbon and polymeric materials from metals and metal oxides like classification, gravity concentration and dense media separation are based on size and density differences between the different particles.

Magnetic or magnetizable metal or metal oxide components may be separated by magnetic separation employing low, medium or high intensity magnetic separators depending on the susceptibility of the magnetizable components. It is possible as well to add magnetic carrier particles. Such magnetic carrier particles are able to form agglomerates with the target particles. By this also non-magnetic materials can be removed by magnetic separation techniques. preferably, magnetic carrier particles can be recycled within the separation process.

By said solid-solid separation steps at least two fractions of solid materials present as slurries will be obtained: One containing mainly the lithium containing transition metal oxide material and one containing mainly the carbonaceous and polymeric battery components. The first fraction is then fed into step (a) of the present invention while the second fraction may be further treated in order to recover the different constituents i.e. the carbonaceous and polymeric material.

In the course of step (a), said lithium containing transition metal oxide material is treated with a **leaching agent**, which is preferably an acid selected from sulfuric acid, hydrochloric acid, nitric acid, methanesulfonic acid, oxalic acid and citric acid or a combination of at least two of the foregoing, for example a combination of nitric acid and hydrochloric acid. In another preferred form the leaching agent is an
- inorganic acid such as sulfuric acid, hydrochloric acid, nitric acid,
- an organic acid such as methanesulfonic acid, oxalic acid, citric acid, aspartic acid, malic acid, ascorbic acid, or glycine,
- a base, such as ammonia, or
- a complex former, such as chelates like EDTA.

Preferably, the leaching agent is an an aqueous acid, such as an inorganic or organic aqueous acid. The concentration of acid may be varied in a wide range, for example of 0.1 to 98% by weight and preferably in a range between 10 and 80%. Preferably, aqueous acid has a pH value in the range of from -1 to 2. The amount of acid is adjusted to maintain an excess of acid referring to the transition metal. Preferably, at the end of step (a) the pH value of the resulting solution is in the range of from -0.5 to 2.5. Preferred example of aqueous acids is aqueous sulfuric acid, for example with a concentration in the range of from 10 to 80% by weight.

The treatment in accordance with step (a) may be performed at a temperature in the range of from 20 to 130°C. If temperatures above 100°C are desired, step (a) is carried out at a pressure above 1 bar. Otherwise, normal pressure is preferred. In the context of the present invention, normal pressure means 1 bar.

In one embodiment of the present invention, step (a) is carried out in a vessel that is protected against strong acids, for example molybdenum and copper rich steel alloys, nickel-based alloys, duplex stainless steel or glass-lined or enamel coated steel. Further examples are polymer liners and polymer vessels from acid-resistant polymers, for example polyethylene such as HDPE and UHMPE, fluorinated polyethylene, perfluoroalkoxy alkanes ("PFA"), polytetrafluoroethylene ("PTFE"), PVdF and FEP. FEP stands for fluorinated ethylene propylene polymer, a copolymer from tetrafluoroethylene and hexafluoropropylene.

In one embodiment of the present invention, the slurry obtained from step (a) may be stirred, agitated, or subjected to a grinding treatment, for example in a ball mill or stirred ball mill. Such grinding treatment leads to a better access of water or acid to a particulate lithium containing transition metal oxide material.

In one embodiment of the present invention, step (a) has a duration in the range of from 10 minutes to 10 hours, preferably 1 to 3 hours. For example, the reaction mixture in step (a) is stirred at powers of at least 0.1 W/l or cycled by pumping in order to achieve a good mixing and to avoid settling of insoluble components. Shearing can be further improved by employing baffles. All these shearing devices need to be applied sufficiently corrosion resistant and may be produced from similar materials and coatings as described for the vessel itself. Step (a) may be performed under an atmosphere of air or under air diluted with N₂. It is preferred, though, to perform step (a) under inert atmosphere, for example nitrogen or a rare gas such as Ar.

The treatment in accordance with step (a) leads to a dissolution of the cathode active material, for example of said NCM or NCA including impurities other than carbon and organic polymers. In most embodiments, a slurry is obtained after carrying out step (a). Lithium and transition metals such as, but not limited to cobalt, nickel and, if applicable, manganese, are in solution.

In one embodiment of the present invention, step (a) is performed in the presence of a **reducing agent**. Examples of reducing agents are organic reducing agents such as methanol, ethanol, sugars, ascorbic acid, urea, bio-based materials containing starch or cellulose, and inorganic reducing agents such as hydrazine and its salts such as the sulfate, and hydrogen peroxide. Preferred reducing agents for step (a) are those that do not leave impurities based upon metals other than nickel, cobalt, or manganese. Preferred examples of reducing agents in step (a) are methanol and hydrogen peroxide. With the help of reducing agents, it is possible to, for example, reduce Co³⁺ to Co²⁺ or Mn(+IV) or Mn³⁺ to Mn²⁺. In a preferred embodiment of the present invention, an excess of reducing agent is employed, referring to the amount of Co and - if present - Mn. Such excess is advantageous in case that Mn is present.

In embodiments wherein a so-called oxidizing acid has been used in step (a) it is preferred to add reducing agent in order to remove non-used oxidant. Examples of oxidizing acids are nitric acid and combinations of nitric acid with hydrochloric acid. In the context of the present invention, hydrochloric acid, sulfuric acid and methanesulfonic acid are preferred examples of non-oxidizing acids.

Depending on the concentration of the acid used, the continuous phase obtained in step (a) may have a transition metal concentration in the range of from 1 up to 15 % by weight, preferably 6 to 11 % by weight.

Preferably, between step (a) and step (b) a **step (a1)** is performed said step (a1) including the removal of non-dissolved solids. An optional step (a1) that may be carried out after step (a) is removal of non-dissolved solids, for example carbonaceous materials and of polymers resulting from the housings of batteries. Said step (a1) may be carried out by filtration centrifugation or settling and decanting with or without the addition of flocculants. The solid residue obtained in step (a1) may be washed with water and can be further treated in order to separate the carbonaceous and polymeric components. In one embodiment of the present invention step (a) and step (a1) are performed sequentially in a continuous operation mode.

### Step (b)

In step (b), the **pH value** (e.g. of the above slurry or solution, which can be obtained in step (a) or (a1), if applicable) is adjusted to 2.5 to 8, preferably 5.5 to 7.5 and even more preferably from 6 to 7. The pH value may be determined by conventional means, for example potentiometrically, and refers to the pH value of the continuous liquid phase at 20°C.

The adjustment of the pH value is usually done by dilution with water or by addition of bases or by a combination thereof. Examples of suitable **bases** are ammonia and alkali metal hydroxides, for example LiOH, NaOH or KOH, in solid form, for example as pellets, or preferably as aqueous solutions. Combinations of at least two of the foregoing are feasible as well, for example combinations of ammonia and aqueous caustic soda. Step (b) is preferably performed by the addition of at least one of sodium hydroxide, lithium hydroxide, ammonia and potassium hydroxide.

In one embodiment of the present invention calcium salts, such as calcium hydroxide is added in step (b). Calcium ions may form insoluble precipitates of e.g. calcium fluoride or calcium tungstate. It is preferred to employ calcium hydroxide in low amounts sufficient to just precipitate said calcium compounds while the other elements forming insoluble hydroxides are precipitated by the addition of alkali hydroxide. Excess of calcium ions can be bound as calcium carbonate by the addition of alkali carbonates. When adding alkali hydroxides calcium ions may be also provided by other calcium salts like calcium chloride or calcium sulfate.

According to the present invention, between steps (b) and (c) a step **(b1)** is performed. In one form said step (b1) comprising the **removal of precipitates** of phosphates, oxides, hydroxides or oxyhydroxides of Al, Fe, Sn, Si, Zr, Zn, or Cu or combinations of at least two of the foregoing. In another form between steps (b) and (c) a step (b1) is performed, said step (b1) comprising the removal of precipitates of phosphates, oxides, hydroxides or oxyhydroxides of Al, Fe, Zr, Zn, or Cu or combinations of at least two of the foregoing. According to the present invention, between steps (b) and (c) a step (b1) is performed, said step (b1) comprising the removal of precipitates of phosphates, tungstate, oxides, hydroxides or oxyhydroxides of Al, Fe, Zr, Zn, Ca or Cu or combinations of at least two of the foregoing. Said precipitates may form during adjustment of the pH value. Phosphates may be stoichiometric or basic phosphates. Without wishing to be bound by any theory, phosphates may be generated on the occasion of phosphate formation through hydrolysis of hexafluorophosphate. It is possible to remove them by filtration or with the help of a centrifuge or decanting centrifuge or by sedimentation. Preferred filters are belt filters, filter press, suction filters, and cross-flow filter. A removal of precipitates of phosphates, tungstate, oxides, hydroxides and oxyhydroxides of Al, Fe, Zr, Zn, Ca or Cu or combinations of at least two of the foregoing may increase the efficiency of step (c).

### Step (c)

Step (c) includes **treating the solution** obtained in step (b1) with **metallic nickel, cobalt or manganese** or a combination of at least two of the foregoing, for example as physical mixture or as alloys. Metallic nickel and metallic cobalt are preferred. In cases that the lithium containing transition metal oxide material does not contain any cobalt or manganese metallic nickel is most preferred.

In one embodiment of the present invention the solution treated with metallic nickel, cobalt or manganese or a combination of at least two of the foregoing can be additionally treated with said metals in multiple steps.

Said metallic nickel, cobalt, or manganese may be in the **form** of sheets, plates, lumps, granules, turnings, wires, briquettes, electrode fragments, powders or foams. In the context of the present invention, sheets may have a thickness in the range of from 0.1 to 5 mm and a length and width that are identical or different and each in the range of from 1 cm to 10 meters. Plates can, for example, have a thickness in the range of from 5.5 mm and a length and width that are identical or different and each in the range of from 2 cm to 10 meters. Turnings may have, for example, a thickness in the range of from 0.1 to 1 mm, a width in the range of from 1 to 5 mm and a length in the range from 1 cm to 20 cm. Briquettes may have a length in the range from 2 to 3 cm and a diameter in the range of from 12 to 15 mm. Electrode fragments can, for example, have a thickness in the range of from 0.5 to 7.0 mm. In many cases, uncut electrode fragments have a thickness in the range of from 1 to 3 mm and irregular cross sections, with the diameter at the broadest place not exceeding 40 mm and the average diameter being in the range of from 10 to 30 mm. Cut electrodes may have a thickness in the range of from 0.5 to 7.0 mm and a cross-section of from 0.1 to 1,000 cm². For example, it is possible to obtain cut electrodes, especially from cobalt, having a thickness of 1 mm and a cross section of 10 cm·10 cm or a thickness in the range of from 5 to 7 mm and a cross section of 55 mm·55 mm. Powders and foams may be used as well and include specially activated materials such as Raney-nickel and Raney-cobalt, for example with an average particle diameter in the range of from 500 nm to 1000 µm and a BET surface in the range of from 0.0001 to 50 m²/g, determined by N₂ adsorption according to DIN 66131.

Lumps, granules and powders of manganese, cobalt or nickel are preferred. For the purpose of the present invention, lumps have a length, width and height in the range of from 5 mm to 10 cm, with the smallest dimension and the largest dimension differing by a factor greater than 1 but not more than 3. Granules have an average length, width and height in the range of from 2 mm to 1 cm. Powders consist of particles of an average diameter of at most 1 mm, preferably in the range of 1 to 200 µm.

In one embodiment of the present invention, step (c) is performed at a temperature in the range of from 10 to 90 °C, preferably from 25 to 60°C.

In one embodiment of the present invention, step (c) is performed by contacting the solution obtained after step (b1) with metallic nickel, cobalt or manganese or a combination of at least two of the foregoing in a **column.** In such embodiments, it is advantageous to provide a column packed with metallic nickel, cobalt or manganese or a combination of at least two of the foregoing in the form of lumps or granules, for example as fixed bed, and allowing a stream of the solution to flow through such column. In embodiments a combination of metals is used these may be employed as physical mixtures of the particles or in separated sections of the column where in each section at least one metal dominates or is present alone.

In one embodiment of the present invention, step (c) is performed at normal pressure. In one embodiment of the present invention, step (c) has a duration in the range of from 10 minutes to 5 hours. In case step (c) is performed in a column, the duration corresponds to the average residence time.

In one embodiment of the present invention, step (c) is performed at a **pH value** range from 1 to 6, preferably pH 2 to 5. In another form step (c) is performed at a pH value below 6.0, below 5.5, below 5.0, below 4.5, below 4.0 or below 3.5. The pH-value of the solution obtained from step (b1) may be adjusted if necessary by addition of acid, preferably of the same type of acid as used in step (a).

Step (c) is particularly useful for removal of copper traces and removal of noble metals other than copper. In another form step (c) is particularly useful for removal precious metals other than copper, such as Ag, Au, Pd, Pt. By performing step (c), no new impurities are introduced into the solution of transition metal(s) that would require an additional purification step. Even if said metallic nickel, cobalt or manganese contains traces of copper such traces do not dissolve. In another embodiment of the present invention the mixture obtained after step (c) is treated by a solid-liquid separation operation (step c1) preferably a filtration in order to ensure that no metallic particles or other unwanted solids are transferred to the following steps.

In one embodiment of the present invention step (c) with or without step (c1) may be repeated one or more times in order to further improve the efficiency of this step.

As a result of step (c) or step (c1) a purified solution of nickel salt and, if applicable, of salts of other transition metals than nickel contained in the lithium containing transition metal oxide material is obtained. Such purified solution may contain alkali metal salts, especially lithium salts.

**Further purification steps** may be added.

Such further purification steps may comprise other precipitation reactions, e.g., with sulfides at controlled pH-values or with certain other anions that are able to form insoluble precipitates with impurity elements, e.g., oxalates, tartrates, phosphates, or silicates. Further options are to selectively separate off such impurities by the application of solvent extraction for example employing selective extractants in a hydrocarbon solvent immiscible with the aqueous metal salt solution. Such extractants may be based on di- or tri-alkyl esters of phosphoric acid, like di(2-ethyl-hexyl)phosphoric acid and tri-n-butyl phosphate, or they are based on hydroxyoximes, for example 2-hydroxy-4-n-octyloxybenzophenone oxime.

In one form the solution obtained from step (c) or (c1) is treated by **hydrogen injection** in the solution at a temperature above 100 °C and a partial pressure above 5 bar to precipitate metal, such as nickel and/or cobalt, and optionally followed by separation of the obtained precipitate. This separation can be a filtration, a centrifugation or a sedimentation. As nickel and cobalt are magnetic metals these precipitates may also be recovered by a magnetic separation. The hydrogen gas is injected at the temperature of above 100 °C, preferably above 130 °C, and in particular above 150 °C. In a preferred form the hydrogen gas is injected at a temperature of 150 to 280 °C. The hydrogen gas is injected at a partial pressure of above 5 bar, preferably above 10 bar, and in particular above 15 bar. In a preferred form the hydrogen gas is injected at a partial pressure of 5 to 60 bar.

The **pH** of the solution can be adjusted before or during the injection of the hydrogen gas. As the reduction produces acid a continuous neutralization of the acid is preferred to keep the acid concentration low. Generally, the hydrogen gas is injected in the leach at a pH-value above 4, preferably above 6, and in particular above 8. The pH-value can be adjusted by continuously feeding of bases while controlling the pH-value. Suitable bases are ammonia, or alkali hydroxides or carbonates, where ammonia is preferred. In a preferred form the hydrogen reduction is done in the presence of a suitable buffer system. Examples of such a buffer system are ammonia and ammonium salts like ammonium carbonate, ammonium sulfate or ammonium chloride. When using such buffer systems, the ratio of ammonia to nickel or to nickel and cobalt should be in the range of 1:1 to 6:1, preferably 2:1 to 4:1.

A **nickel-reduction catalyst** and/or a **cobalt-reduction catalyst** may be present in the solution during the injection of the hydrogen gas, such as metallic nickel, metallic cobalt, ferrous sulfate, ferrous sulfate modified with aluminum sulfate, palladium chloride, chromous sulfate, ammonium carbonate, manganese salts, platinic chloride, ruthenium chloride, potassium/ammonium tetrachloroplatinate, ammonium/sodium/potassium hexachloroplatinat, or silver salts (e.g. nitrate, oxide, hydroxide, nitrites, chloride, bromide, iodide, carbonate, phosphate, azide, borate, sulfonates, or carboxylates or silver). Ferrous sulfate, aluminum sulfate and manganese sulfate may be present in the leach from corresponding components of the transition metal material. Preferred nickel-reduction catalysts and/or a cobalt-reduction catalyst are ferrous sulfate, aluminum sulfate, manganese sulfate and ammonium carbonate. A preferred nickel-reduction catalyst is metallic nickel, in particular metallic nickel powder. A preferred cobalt-reduction catalyst is metallic cobalt powder. These metal powders of nickel or cobalt may be obtained in-situ at the beginning of the reduction process or ex-situ in a separate reactor by reducing aqueous Ni and Co salt solutions.

In a preferred form the solution contains dissolved salts of nickel, and nickel in elemental form is precipitated by the hydrogen injection, optionally in the presence of a nickel-reduction catalyst. In a form the leach contains dissolved salts of cobalt and cobalt in elemental form is precipitated by the hydrogen injection, optionally in the presence of a cobalt-reduction catalyst. In another preferred form the leach contains dissolved salts of nickel and of cobalt, and nickel and cobalt in elemental form is precipitated by the hydrogen injection, optionally in the presence of a nickel-reduction catalyst and a cobalt-reduction catalyst. In another preferred form the leach contains dissolved salts of nickel and of cobalt, and nickel in elemental form is precipitated by the hydrogen injection, optionally in the presence of a nickel-reduction catalyst, and where the precipitate may contain 0 to 50 wt% of cobalt in elemental form.

In another form the solution obtained from step (c) or (c1) is treated by **electrolysis** of an electrolyte containing said solution, e.g. for depositing impurities or nickel, cobalt and/or copper as elemental metals on a deposition cathode. The electrolysis can be run potentiostatic or galvanostatic, wherein potentiostatic is preferred. The electrolyte is usually an aqueous electrolyte. The electrolyte may have a pH above 1, 2, 3, 4, or 5, preferably above 5. The electrolyte may have a pH below 10, 9, or 8. In another form the electrolyte may have a pH from 4 to 8. The electrolyte may contain buffer salts, e.g. salts of acetate, to adjust the pH value. The deposition cathode may consist of sheets conducting materials like metals or glassy carbon. Preferred are materials that provide a high over-voltage for the formation of hydrogen which should be avoided. A suitable metal is lead. The cathode can also be made from conducting particulate matter e.g. metal or graphite particles. These particles have a particle size d50 in the range from 1 to 1000 µm, preferably from 5 to 500 µm, and in particular from 5 to 200 µm. The electrolyte may have a pH from 4 to 8.

In particular the electrolysis is made in an electrochemical **filter flow cell** in which the electrolyte is passed through a deposition cathode in form of a particulate filter-aid layer. The electrochemical filter flow cell comprises usually a flow cell anode, which can be made of anode materials as given above. The flow cell anode and the deposition cathode may be separated by a diaphragm or a cation exchange membrane as mentioned above. The deposited metals be separated, re-dissolved and precipitated as e.g. hydroxides.

### Step (d)

In one embodiment of the present invention, after step (c) an additional step (d) is performed. Step (d) includes usually the **precipitation** of the transition metals as mixed hydroxides or mixed carbonates, preferably as mixed hydroxides. Step (d) includes preferably the precipitation of nickel and, optionally, cobalt or manganese as mixed hydroxide, mixed oxyhydroxide or mixed carbonate. In cases where nickel and cobalt have been recovered by one of the methods described above namely by hydrogen injection or electrolysis step (d) serves to precipitate manganese if applicable.

In a preferred embodiment of the present invention, step (d) is performed by **adding ammonia** or an organic amine such as dimethyl amine or diethyl amine, preferably ammonia, and at least one inorganic base such as lithium hydroxide, lithium bicarbonate, sodium hydroxide, potassium hydroxide, sodium carbonate, sodium bicarbonate, potassium carbonate or potassium bicarbonate or a combination of at least two of the foregoing. Preferred is the addition of ammonia and sodium hydroxide or lithium hydroxide.

In one embodiment of the present invention, step (d) is performed at a temperature in the range of from 10 to 85°C, preferred are 20 to 50°C. In one embodiment of the present invention, the concentration of organic amine - or ammonia - is in the range of from 0.01 to 1 mole/l, preferably 0.1 to 0.7 mole/l. The term "ammonia concentration" in this context includes the concentration of ammonia and ammonium. Particular preference is given to amounts of ammonia for which the solubility of Ni²⁺ and Co²⁺ in the mother liquor is not more than 1000 ppm each, more preferably not more than 500 ppm each.

In one embodiment of the present invention, mixing is effected during step (d) of the inventive process, for example with a stirrer, a rotor stator mixer or a ball mill. Preference is given to introducing a stirrer output of at least 1 W/l into the reaction mixture, preferably at least 3 W/l and more preferably at least 5 W/l. In one embodiment of the present invention, a stirrer output of not more than 25 W/l can be introduced into the reaction mixture.

Step (d) of the inventive process may be performed under air, under inert gas atmosphere, for example under noble gas or nitrogen atmosphere, or under reducing atmosphere. An example of a reducing gas is, for example, SO₂. Preference is given to working under inert gas atmosphere, especially under nitrogen gas.

Step (d) of the inventive process may be performed in the presence or absence of one or more **reducing agents.** Examples of suitable reducing agents are hydrazine, primary alcohols such as, but not limited to methanol or ethanol, furthermore hydrogen peroxide, ascorbic acid, glucose and alkali metal sulfites. It is preferable not to use any reducing agent in step (d) when only minor amounts of Mn are present. The use of a reducing agent or inert atmosphere or both in combination is preferred in cases where significant amounts of manganese are present in the transition metal oxide material, for example, at least 3 mol-%, referring to the transition metal part of the respective cathode active material.

In one embodiment of the present invention, step (d) is performed at a pH value in the range of from 7.5 to 12.5, preferred are pH values from 9 to 12 in the case of hydroxides and pH values in the range from 7.5 to 8.5 in the case of carbonates. The pH value refers to the pH value in the mother liquor, determined at 23°C. Step (d) may be carried out in a batch reactor or - preferably - continuously, for example in a continuous stirred tank reactor or in a cascade of two or more, for example two or three continuous stirred tank reactors.

As a result of step (d) a slurry containing transition metal (oxy)hydroxides or carbonates as precipitates in a solution of alkali salts of the acids employed in the preceding steps including the lithium contained in the lithium containing transition metal oxide containing material is obtained.

This slurry obtained in step (d) can be subjected to a solid-liquid separation (step (d1)) to obtain the solid precipitate and the liquid solution.

The transition metal (oxy)hydroxides or carbonates of the solid precipitate can be further treated for different applications. In a preferred embodiment the transition metal (oxy)hydroxides or carbonates are re-dissolved in an acid to obtain a transition metal salt solution suitable for the precipitation of cathode active precursor materials.

The alkali salt containing solution can be further treated to recover the lithium contained in it.

For the purpose of **further purification,** the solids recovered in step (d) or step (d1) may be dissolved in an acid, for example hydrochloric acid or more preferably sulfuric acid, and reprecipitated.

In one embodiment of the present invention the slurry of transition metal (oxy)hydroxides or carbonates obtained in step (d) is subjected to a **solid-liquid separation** process (step (d1)), preferably a filtration. The obtained mixed (oxy)hydroxide or mixed carbonate may be washed to reduce the amount of alkali entrained in the mixed (oxy)hydroxide or mixed carbonate to levels below 0.1 % by weight, preferably below 0.01 %. Then the obtained mixed hydroxides are re-dissolved in an appropriate acid. For example, hydrochloric acid or more preferably sulfuric acid In one embodiment of the present invention the re-dissolved mixed metal salts are reprecipitated as mixed (oxy)hydroxide or mixed carbonate.

In one embodiment of the present invention, one or more and preferably all steps involving at least one of alkali metal hydroxides, alkali metal carbonates and alkali metal bicarbonates are performed with lithium hydroxide, lithium carbonate or lithium bicarbonate, respectively. In such embodiments, the lithium from the lithium transition metal oxide material, which will be dissolved during the process, is not contaminated with alkali metals other than lithium. The combined lithium containing solutions may be treated in a way to ensure high recovery of the lithium which to some extend can be re-introduced to the inventive process while the rest can be used for the production of cathode active materials, for example by crystallization as lithium carbonate, step (e1), or by electrolysis (such as described in WO2013/159194 or WO2009/131628) or electrodialysis (such as described in WO2010/056322) to yield lithium hydroxide, step (e2). In another form the process includes an additional step (e1) of recovering the lithium by way of precipitation as carbonate or hydroxide. In another form the process includes the additional step (e2) of recovering the lithium by way of electrolysis or electrodialysis.

Lithium carbonate may be crystallized by addition of ammonium, sodium or potassium carbonate. Although, as an alternative, lithium may be precipitated as phosphate or fluoride a lithium carbonate crystallization is preferred as lithium carbonate can be used in the manufacture of cathode active material directly or after transformation to lithium hydroxide.

Since inorganic fluoride components contained in the lithium containing transition metal oxide containing material may decompose in the presence of water and aqueous acid solutions in any of the processing steps described in the present invention volatile fluorine compounds like hydrogen fluoride may be formed. It is therefore preferred to connect the processing vessels to an off-gas system where these volatile fluorine compounds esp. hydrogen fluoride can be efficiently removed. Preferred are gas scrubbers that may bind hydrogen fluoride as fluoride salts e.g. as sodium fluoride, calcium fluoride or barium fluoride.

The inventive process can be set-up in part or in whole as a continuous process controlled by sensors and actuators as part of a computer based process control system.

Further alkali metals may be recovered from any of the mother liquors of the inventive process, for example sodium, by selective crystallization techniques known *per se.*

By performing the inventive process, it is possible to recover the transition metals nickel and, if applicable, cobalt and manganese from cathode materials containing nickel and - if applicable, at least one of cobalt and manganese in a form that they can be converted into cathode active materials very easily. In particular, the inventive process allows the recovery of transition metals such as nickel and cobalt and, optionally, manganese, that contain only tolerable traces of impurities such as copper, iron, zirconium, and zinc, for example with less than 10 ppm of copper, preferably even less, for example 1 to 5 ppm. The higher the pH value in step (b), the better the Al removal.

The invention is further illustrated by working examples.

### Examples

General remark: percentages are % by weight unless expressly indicated otherwise. The metal impurities and phosphorous were determined by elemental analysis using ICP-OES (inductively coupled plasma - optical emission spectroscopy) or ICP-MS (inductively coupled plasma - mass spectrometry). Total carbon was determined with a thermal conductivity detector (CMD) after combustion. Fluorine was detected with an ion sensitive electrode (ISE) after combustion for total fluorine or after H₃PO₄ distillation for ionic fluoride.

An amount of 900 g mechanically treated battery scrap (particle size D50 about 20 µm) containing
- 360 g spent cathode active material containing nickel, cobalt and manganese in similar molar amounts; and a 1/1 molar ratio of Li to the sum of Ni, Co, and Mn as determined by elemental analysis,
- 430 g of organic carbon in the form of graphite and soot and residual electrolyte, and
- 75 g of further impurities comprising Al (16 g), Cu (14.4), F (in total: 31.5 g), Fe (2.7 g), P (7.65 g), Zn (0.72 g), Mg (40 ppm), Ca (40 ppm), ppm referring to total of the above battery scrap,
was slurried in 2.5 kg water and stirred vigorously for 1 hour. Then, the solids were separated by filtration, washed with 1.5 kg water, and then re-slurried in 480 g deionized water in a 2.5 L stirred batch reactor.

All impurity contents are given as weight percentages unless specifically noted otherwise, and refer to the total amount of mechanically treated battery scrap. By the above treatment, about 50% of the organic fluoride was removed.

### Step (a.1): treatment with acid

A mixture of 1570 g H₂SO₄ (50% H₂SO₄ in water) and 267 g hydrogen peroxide (30% H₂O₂ in water) was added dropwise to the above slurry under vigorous stirring. The temperature of the slurry was kept between 30 and 40°C. After completion of the addition, the resulting reaction mixture was stirred for another 30 min at 30°C, heated to 60°C for 2 hours and then cooled to ambient temperature. Solids were removed from the resultant slurry by suction filtration. The filter cake was washed with 150 g deionized water. The combined filtrates (2728 g) contained 78 g Ni, 75 g Co, 61 g Mn, and 27 g Li, corresponding to leaching efficiencies >98% for all 4 metals.

### Steps (b.1) and (b2.1): pH adjustment

The pH value of 2020 g of the combined filtrates from step (a.1) was adjusted to pH 6.5 by adding 988 g of a 4 molar caustic soda solution under stirring. Precipitate formation could be observed. After stirring for another 30 min the solids were removed by suction filtration. The obtained filtrate (2773 g) contains impurity levels of Al, P, Zn, Mg, Ca, and Fe below 5 ppm, and about 40 ppm of Cu.

### Step (c.1): Treatment with metallic nickel

The filtrate from step (b2.1) was poured into a 2.5 L stirred batch reactor, 22.3 g nickel powder (max. diameter 150 µm, commercially available from Sigma Aldrich Chemie GmbH) were added, an amount of 18.4 g 50wt% H₂SO₄ was added. The resultant mixture had a pH value of 2.75. It was then heated to 60 °C for 7 hours and allowed to cool to ambient temperature. After cooling, the solids were removed by filtration, (c.1), and the filtrate was again subjected to 20.3 g nickel powder, heated at 60°C for 7 hours, and filtered to provide 2614 g of a Ni, Co, Mn and Li containing solution with a copper content below 1 ppm.

Recovery yields: Ni: 90%, Co: 92%, Mn: 94%, Li: 92%

### Step (d.1): precipitation

A 2.5-I-stirred batch reactor was charged with 2606 g of the solution obtained under (c.1). Under an atmosphere of argon, the pH value was adjusted to 12.0 under vigorous stirring by dropwise addition of 1,341 g of an aqueous NaOH:NH₃ mixture made from 1.25 kg of a 4 molar aqueous NaOH solution and 113 g of an aqueous 25wt% ammonia solution. After stirring at ambient temperature for 16 hours, the resultant slurry was filtered with a pressure filter applying an inert gas pressure of 4.5 atm. 3002 g of a clear and colorless solution containing 0.43 g/l Li and 4.8 g/l Na was obtained. After completion of the filtration, the filter cake was re-slurried in 2.3 kg deionized and degassed water, stirred for one hour and filtered with a pressure filter to give 2327 g of a clear and colorless solution containing 0.12 g/l Li and 1.3 g/l Na. After completion of the filtration, the filter cake was re-slurried in 2660 g deionized and degassed water, stirred for one hour and filtered with a pressure filter. After completion of the filtration, the filter cake was dissolved in a mixture of 185 g deionized water and 262.1 g 75% H₂SO₄, stirred at 60°C for 2 hours, cooled to 25 °C and filtered via suction filter. 1017 g of a clear and dark red colored filtrate were recovered, containing 43 g Ni, 43 g Co, 35.4 g Mn as well as less than 1 ppm Cu, 3 ppm Al, 2 ppm Fe, 5 ppm Zn, and 3 ppm Zr.

The resultant solution was excellently suited for the synthesis of a precursor for a cathode active material.

Overall recovery yields can be back-calculated from above values: Ni: 79%, Co: 82%, Mn: 83%, Li: 77%. Recovery yields for Ni, Co, and Mn are based on the metal contents in the final clear and dark red solution. Recovery of Li is based on the Li content of the combined two clear and colorless solutions obtained from the pressure filtration.

## Claims

1. Process for the recovery of transition metal from cathode active materials containing nickel and lithium, wherein said process comprises the steps of
(a) treating a lithium containing transition metal oxide material with a leaching agent,
(b) adjusting the pH value to 2.5 to 8,
(b1) removal of precipitates of phosphates, tungstate, oxides, hydroxides or oxyhydroxides of Al, Fe, Zr, Zn, Ca or Cu or combinations of at least two of the foregoing,
**characterized by** the step of
(c) treating the solution obtained in step (b1) with metallic nickel, cobalt or manganese or a combination of at least two of the foregoing, and wherein step (b1) is performed between steps (b) and (c).

2. Process according to claim 1 wherein step (b1) comprises the removal of precipitates of phosphates, oxides, hydroxides or oxyhydroxides of Al, Fe, Zr, Zn or Cu or combinations of at least two of the foregoing.

3. Process according to claim 1 or 2 wherein the cathode active materials from which transition metals are to be recovered also contain at least one of cobalt and manganese.

4. Process according to any of the preceding claims wherein step (b) is performed by the addition of at least one of sodium hydroxide, lithium hydroxide, ammonia and potassium hydroxide.

5. Process according to any of the preceding claims wherein step (c) is performed at a temperature in the range of from 25 to 60°C.

6. Process according to any of the preceding claims wherein step (c) is performed at a pH value in the range from 2 to 5.

7. Process according to any of the preceding claims wherein prior to step (a) a removal of carbon and polymeric material is performed by at least one of the following methods: gravity concentration or flotation or dense media separation or magnetic separation.

8. Process according to any of the preceding claims wherein in step (a) a reducing agent is added.

9. Process according to any of the preceding claims wherein between step (a) and step (b) a step (a1) is performed said step (a1) including the removal of non-dissolved solids.

10. Process according to any of the preceding claims wherein said process comprises the additional step (d) of precipitation of nickel and, optionally, cobalt or manganese as mixed hydroxide, mixed oxyhydroxide or mixed carbonate.

11. Process according to any of the preceding claims including an additional step (e1 ) of recovering the lithium by way of precipitation as carbonate or hydroxide.

12. Process according to any of the preceding claims wherein including the additional step (e2) of recovering the lithium by way of electrolysis or electrodialysis.

13. Process according to any of the preceding claims wherein the leaching agent comprises an acid selected from sulfuric acid, hydrochloric acid, nitric acid, methanesulfonic acid, oxalic acid and citric acid.

14. Process according to any of the preceding claims wherein the solution obtained from step (c) is treated by hydrogen injection in the solution at a temperature above 100 °C and a partial pressure above 5 bar to precipitate metal, such as nickel and/or cobalt, and optionally followed by separation of the obtained precipitate.

15. Process according to any of the preceding claims wherein the solution obtained from step (c) is treated by electrolysis of an electrolyte containing said solution.

## Patentansprüche

1. Verfahren zum Rückgewinnen von Übergangsmetall aus Kathodenaktivmaterialien, die Nickel und Lithium enthalten, wobei das Verfahren die folgenden Schritte umfasst:
(a) Behandeln eines Lithium enthaltenden Übergangsmetalloxidmaterials mit einem Laugungsmittel,
(b) Einstellen des pH-Werts auf 2,5 bis 8,
(b1) Entfernen von Niederschlägen von Phosphaten, Wolframat, Oxiden, Hydroxiden oder Oxyhydroxiden von Al, Fe, Zr, Zn, Ca oder Cu oder Kombinationen von mindestens zwei der vorstehenden,
**gekennzeichnet durch** den folgende Schritt:
(c) Behandeln der in Schritt (b1) erhaltenen Lösung mit metallischem Nickel, Cobalt oder Mangan oder einer Kombination von mindestens zwei der vorstehenden, und wobei Schritt (b1) zwischen den Schritten (b) und (c) durchgeführt wird.

2. Verfahren nach Anspruch 1, wobei Schritt (b1) das Entfernen von Niederschlägen von Phosphaten, Oxiden, Hydroxiden oder Oxyhydroxiden von Al, Fe, Zr, Zn oder Cu oder Kombinationen von mindestens zwei der vorstehenden umfasst.

3. Verfahren nach Anspruch 1 oder 2, wobei die Kathodenaktivmaterialien, aus denen die Übergangsmetalle zurückzugewinnen sind, darüber hinaus mindestens eines von Cobalt und Mangan umfassen.

4. Verfahren nach einem der vorstehenden Ansprüche, wobei Schritt (b) durch die Zugabe von mindestens einem von Natriumhydroxid, Lithiumhydroxid, Ammoniak und Kaliumhydroxid durchgeführt wird.

5. Verfahren nach einem der vorstehenden Ansprüche, wobei Schritt (c) bei einer Temperatur im Bereich von 25 bis 60 °C durchgeführt wird.

6. Verfahren nach einem der vorstehenden Ansprüche, wobei Schritt (c) bei einem pH-Wert im Bereich von 2 bis 5 durchgeführt wird.

7. Verfahren nach einem der vorstehenden Ansprüche, wobei vor Schritt (a) eine Entfernung von Kohlenstoff und polymerem Material durch mindestens eines der folgenden Verfahren durchgeführt wird: Gravitationskonzentration oder Flotation oder Trennung dichter Medien oder magnetische Trennung.

8. Verfahren nach einem der vorstehenden Ansprüche, wobei in Schritt (a) ein Reduktionsmittel zugegeben wird.

9. Verfahren nach einem der vorstehenden Ansprüche, wobei zwischen Schritt (a) und Schritt (b) ein Schritt (a1) durchgeführt wird, wobei der Schritt (a1) das Entfernen ungelöster Feststoffe beinhaltet.

10. Verfahren nach einem der vorstehenden Ansprüche, wobei das Verfahren den zusätzlichen Schritt (d) der Fällung von Nickel und gegebenenfalls Cobalt oder Mangan als gemischtes Hydroxid, gemischtes Oxyhydroxid oder gemischtes Carbonat umfasst.

11. Verfahren nach einem der vorstehenden Ansprüche, das einen zusätzlichen Schritt (e1) des Rückgewinnens des Lithiums mittels Fällung als Carbonat oder Hydroxid beinhaltet.

12. Verfahren nach einem der vorstehenden Ansprüche, wobei ein zusätzlicher Schritt (e2) des Rückgewinnens des Lithiums mittels Elektrolyse oder Elektrodialyse enthalten ist.

13. Verfahren nach einem der vorstehenden Ansprüche, wobei das Laugungsmittel eine Säure umfasst, die ausgewählt ist aus Schwefelsäure, Salzsäure, Salpetersäure, Methansulfonsäure, Oxalsäure und Citronensäure.

14. Verfahren nach einem der vorstehenden Ansprüche, wobei die in Schritt (c) erhaltene Lösung durch Wasserstoffeinblasung in die Lösung bei einer Temperatur von über 100 °C und einem Partialdruck von über 5 bar behandelt wird, um Metall wie Nickel und/oder Cobalt zu fällen, und worauf gegebenenfalls eine Trennung des erhaltenen Niederschlags folgt.

15. Verfahren nach einem der vorstehenden Ansprüche, wobei die in Schritt (c) erhaltene Lösung durch Elektrolyse eines Elektrolyten, der die Lösung enthält, behandelt wird.

## Revendications

1. Procédé pour la récupération de métal de transition à partir de matériaux actifs de cathode contenant du nickel et du lithium, ledit procédé comprenant les étapes de
(a) traitement d'un matériau de type oxyde de métal de transition contenant du lithium avec un agent de lixiviation,
(b) ajustement de la valeur de pH de 2,5 à 8,
(b1) élimination de précipités de phosphates, de tungstate, d'oxydes, d'hydroxydes ou d'oxyhydroxydes d'Al, de Fe, de Zr, de Zn, de Ca ou de Cu ou de combinaisons d'au moins deux des précédents,
**caractérisé par** l'étape de
(c) traitement de la solution obtenue dans l'étape (b1) avec du nickel, cobalt ou manganèse métallique ou une combinaison d'au moins deux des précédents, et
l'étape (b1) étant réalisée entre les étapes (b) et (c).

2. Procédé selon la revendication 1, l'étape (b1) comprenant l'élimination de précipités de phosphates, d'oxydes, d'hydroxydes ou d'oxyhydroxydes d'Al, de Fe, de Zr, de Zn ou de Cu ou de combinaisons d'au moins deux des précédents.

3. Procédé selon la revendication 1 ou 2, les matériaux actifs de cathode à partir desquels des métaux de transition doivent être récupérés contenant également au moins l'un parmi le cobalt et le manganèse.

4. Procédé selon l'une quelconque des revendications précédentes, l'étape (b) étant réalisée par l'ajout d'au moins l'un parmi l'hydroxyde de sodium, l'hydroxyde de lithium, l'ammoniac et l'hydroxyde de potassium.

5. Procédé selon l'une quelconque des revendications précédentes, l'étape (c) étant réalisée à une température dans la plage allant de 25 à 60 °C.

6. Procédé selon l'une quelconque des revendications précédentes, l'étape (c) étant réalisée à une valeur de pH dans la plage de 2 à 5.

7. Procédé selon l'une quelconque des revendications précédentes dans lequel avant l'étape (a), une élimination de carbone et de matière polymérique est réalisée par au moins l'un des procédés suivants : concentration par gravité ou flottation ou séparation de milieux denses ou séparation magnétique.

8. Procédé selon l'une quelconque des revendications précédentes dans lequel dans l'étape (a), un agent de réduction est ajouté.

9. Procédé selon l'une quelconque des revendications précédentes dans lequel entre l'étape (a) et l'étape (b), une étape (a1) est réalisée, ladite étape (a1) comprenant l'élimination de solides non dissous.

10. Procédé selon l'une quelconque des revendications précédentes, ledit procédé comprenant l'étape supplémentaire (d) de précipitation de nickel et, éventuellement, de cobalt ou de manganèse en tant qu'hydroxyde mixte, oxyhydroxyde mixte ou carbonate mixte.

11. Procédé selon l'une quelconque des revendications précédentes comprenant une étape supplémentaire (e1) de récupération du lithium au moyen d'une précipitation en tant que carbonate ou hydroxyde.

12. Procédé selon l'une quelconque des revendications précédentes comprenant l'étape supplémentaire (e2) de récupération du lithium au moyen d'une électrolyse ou d'une électrodialyse.

13. Procédé selon l'une quelconque des revendications précédentes, l'agent de lixiviation comprenant un acide choisi parmi l'acide sulfurique, l'acide chlorhydrique, l'acide nitrique, l'acide méthanesulfonique, l'acide oxalique et l'acide citrique.

14. Procédé selon l'une quelconque des revendications précédentes, la solution obtenue de l'étape (c) étant traitée par injection d'hydrogène dans la solution à une température supérieure à 100 °C et une pression partielle supérieure à 5 bars pour précipiter un métal, tel que le nickel et/ou le cobalt, et éventuellement suivie par la séparation du précipité obtenu.

15. Procédé selon l'une quelconque des revendications précédentes, la solution obtenue de l'étape (c) étant traitée par électrolyse d'un électrolyte contenant ladite solution.
